# FASCICULE DE BREVET EUROPEEN

(11) **EP 3 371 037 B1**
(45) Date de publication et mention de la délivrance du brevet: **28.08.2019**
(21) Numéro de dépôt: 16794374.5
(22) Date de dépôt: 13.10.2016
(51) Int. Cl.: B62D 25/04

(54) **RENFORT DE PIED ARRIÈRE D'UNE CARROSSERIE DE VÉHICULE AUTOMOBILE**
VERSTÄRKUNG DER HINTEREN SÄULE EINER KRAFTFAHRZEUGKAROSSERIE
REAR PILLAR REINFORCEMENT OF A MOTOR VEHICLE BODY

(30) Priorité: 06.11.2015 FR 1560645
(43) Date de publication de la demande: 12.09.2018
(73) Titulaire: PSA AUTOMOBILES S.A., 78300 Poissy (FR)
(72) Inventeur: DRAPT, Christophe, 90000 Belfort (FR); BERGER, Patrick, 25200 Montbeliard (FR); MONG, Vivien, 70400 Hericourt (FR)
(74) Mandataire: Fernandez, Francis Lionel
(86) Numéro de dépôt international: PCT/FR2016/052640
(87) Numéro de publication internationale: WO 2017/077207

(56) Documents cités:
- EP-A1- 2 803 560
- WO-A1-2013/011219
- WO-A1-2013/018415
- JP-A- 2006 069 268

## Description

L'invention a trait aux pièces de renforts de la carrosserie des véhicules automobiles, et plus précisément aux renforts situés du côté de l'habitacle.

La carrosserie comprend traditionnellement des pieds avant, milieu et arrière. Ces pieds relient le toit à la plateforme du véhicule et participent à la rigidité structurelle du véhicule automobile. Les pieds absorbent de l'énergie lors d'un choc latéral et empêchent les déformations verticales. Le document EP 2803560 A1 divulgue une telle carrosserie comprenant des pieds arrières pourvus de renforts verticaux.

On connait du document WO 2013/018415 des renforts destinés à améliorer la rigidité structurelle de la carrosserie, ces renforts se présentant sous la forme de profilés métalliques, positionnés en doublure des pieds.

Cette structure de l'art antérieur présente de nombreux inconvénients. Le pied arrière présente une géométrie différente, selon que le modèle du véhicule comprend une porte latérale coulissante ou non et il existe autant de renforts de pied arrière qu'il existe de pieds arrières. Les renforts de pied arrière peuvent également être différents les uns des autres, selon que la porte latérale coulissante est motorisée ou manuelle. Cette diversité implique des risques d'erreur de montage. Un espace de stockage important doit être prévu pour stocker les différents modèles de renforts. Enfin, l'outillage doit pouvoir s'adapter à la diversité des renforts.

Un objectif est de proposer un renfort de pied arrière nécessitant peu d'adaptations, selon que le véhicule automobile comprend une porte latérale coulissante ou non, que celle-ci soit motorisée ou manuelle.

A cet effet, il est proposé, en premier lieu, un renfort de pied arrière d'une carrosserie de véhicule automobile comprenant une extrémité supérieure et une extrémité inférieure, le renfort comprenant une partie centrale et une paroi de custode définissant avec la partie centrale un angle et un espace intérieur, la paroi de custode comprenant une paroi supérieure de custode et une paroi inférieure de custode située à l'extrémité inférieure, la paroi inférieure de custode étant décalée par rapport à la paroi supérieure de custode vers un espace extérieur par opposition avec l'espace intérieur, la partie centrale comprenant une partie supérieure et une partie inférieure située à l'extrémité inférieure, la partie inférieure étant décalée par rapport à la partie supérieure vers l'espace extérieur, la partie inférieure et la paroi inférieure de custode définissant ensemble un espace d'accueil d'une extrémité de boîtier de rail d'une porte latérale coulissante.

Un tel renfort de pied arrière présente l'avantage de pouvoir être utilisé pour renforcer un quelconque pied arrière, que celui-ci soit situé au-dessus d'une porte latérale coulissante ou non.

Diverses caractéristiques supplémentaires peuvent être prévues, seules ou en combinaison :
- le renfort de pied arrière comprend un renfort de custode dont la forme est sensiblement similaire à une feuillure de custode de la carrosserie ;
- la paroi de custode et le renfort de custode définissent un angle compris entre 100° et 170° ;
- la paroi de custode et la partie centrale définissent un angle compris entre 100° et 170° ;
- la paroi de custode et la paroi inférieure de custode sont reliées par une paroi oblique ;
- la paroi oblique et la paroi supérieure de custode définissent une première courbure, dont la concavité est tournée vers l'espace extérieur, la paroi oblique et la paroi inférieure de custode définissent une seconde courbure, dont la concavité est tournée vers l'espace intérieur du renfort de pied arrière ;
- la partie centrale comprend un décroché, orienté vers l'espace extérieur, ce décroché reliant la partie supérieure à la partie inférieure ;
- le renfort de pied arrière comprend une pièce de renfort supérieure, positionnée entre la paroi de custode et la partie centrale.

Il est proposé, en second lieu, un véhicule automobile comprenant une carrosserie munie de pieds arrière, et comprenant un renfort de pied arrière tel que précédemment décrit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'une carrosserie de véhicule automobile comprenant un renfort de pied arrière,
- la figure 2 est vue en perspective éclatée, d'un pied arrière de véhicule automobile comprenant une renfort de pied arrière et une doublure d'habitacle,

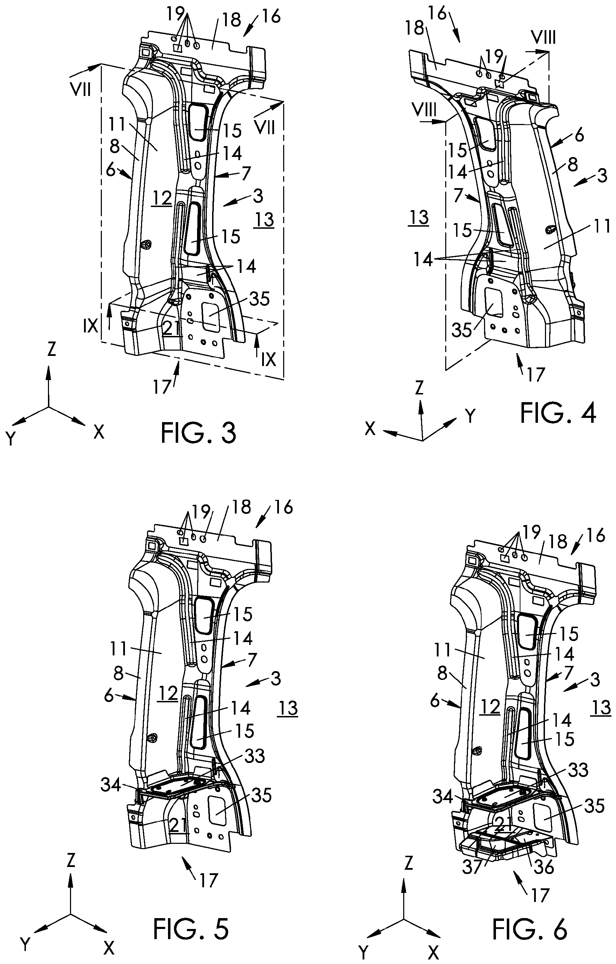

- la figure 3 est une vue en perspective d'un renfort de pied arrière,
- la figure 4 est une autre vue en perspective du renfort de pied arrière de la figure 3,
- la figure 5 est une vue en perspective du renfort de pied arrière des figures 3 et 4, muni d'une pièce de renfort supérieure,
- la figure 6 est une vue en perspective du renfort de pied arrière des figures 3 à 5, muni d'une pièce de renfort inférieure et d'un couvercle de boîtier de rail,
- la figure 7 est une vue en section selon le plan VII-VII de la figure 3,
- la figure 8 est une vue en section selon le plan VIII-VIII de la figure 4,
- la figure 9 est une vue en section selon le plan IX-IX de la figure 3.

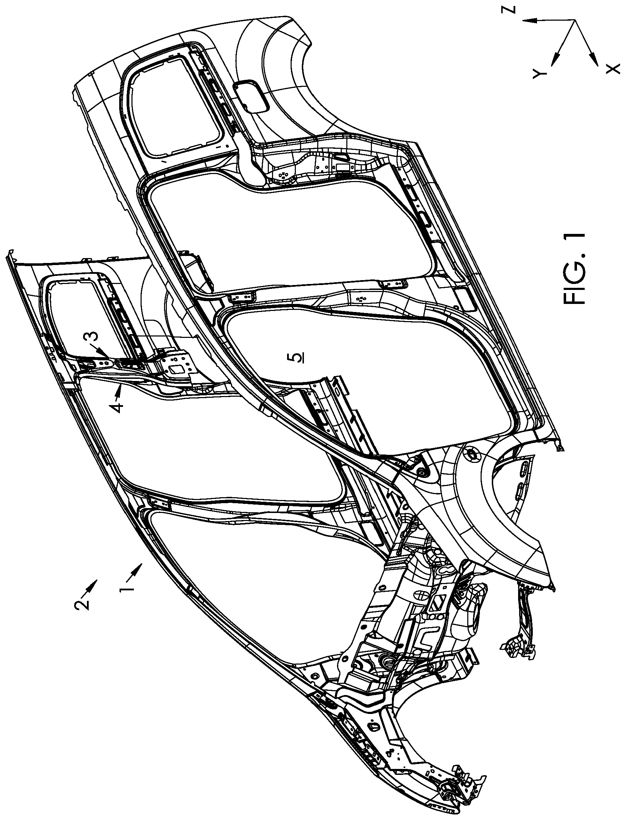

Sur la figure 1 est représentée une carrosserie 1 de véhicule 2 automobile, munie d'un renfort 3 de pied 4 arrière. Le renfort 3 est fixé sur la carrosserie 1, du côté de l'habitacle 5.

On définit par rapport au véhicule 2 un repère orthogonal XYZ comprenant trois axes perpendiculaires deux à deux, à savoir :
- un axe X, définissant une direction longitudinale, horizontale, confondue avec la direction générale de déplacement du véhicule 2,
- un axe Y, définissant une direction transversale, horizontale, qui avec l'axe X définit un plan XY horizontal,
- un axe Z, définissant une direction verticale, perpendiculaire au plan XY horizontal.

Le renfort 3 de pied 4 arrière comprend une partie 6 custode et une partie 7 centrale. La partie 7 centrale se présente sous la forme d'une pièce s'étendant dans le plan XZ. La partie 6 custode fait saillie de la partie 7 centrale selon l'axe Y.

L'expression "custode" désigne la partie arrière du véhicule 2 automobile située au-dessus du logement de roue arrière.

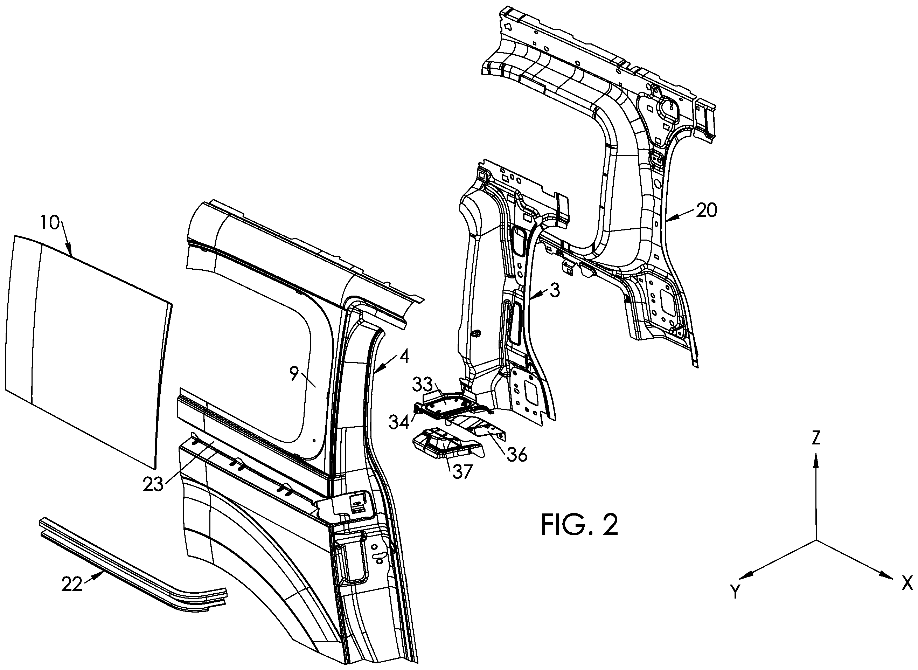

La partie 6 custode comprend un renfort 8 de custode, destiné à renforcer une feuillure 9 de custode. A cet effet, le renfort 8 de custode présente une forme similaire à la feuillure 9 de custode, comme visible sur la figure 2. La feuillure 9 de custode correspond au logement dans lequel est placée une fenêtre 10 de custode. Le renfort 8 de custode est situé en regard de la feuillure 9 de custode.

La partie 6 custode comprend également une paroi 11 de custode, définissant avec le renfort 8 de custode un angle compris entre 100° et 170°.

La paroi 11 de custode définit avec la partie 7 centrale un espace 12 intérieur du renfort 3 de pied 4 arrière, par opposition à un espace 13 extérieur autour du renfort 3 de pied 4 arrière.

La paroi 11 de custode et la partie 7 centrale définissent un angle compris entre 100° et 170°.

La paroi 11 de custode permet, d'une part, de décaler le renfort 8 de custode de la partie 7 centrale selon l'axe Y pour que celui-ci soit positionné au plus près de la feuillure 9 de custode, et, d'autre part, participe au renforcement du pied 4 arrière, conjointement avec la partie 7 centrale.

La partie 7 centrale comprend des protubérances 14 obtenues, par exemple, par emboutissage, et conférant de la rigidité structurelle au renfort 3 de pied 4 arrière.

Le renfort 3 de pied 4 arrière comprend des trous 15 d'allègement.

Le renfort 3 de pied 4 arrière comprend une extrémité 16 supérieure et une extrémité 17 inférieure.

L'extrémité 16 supérieure comprend une platine 18 de fixation, s'étendant sensiblement dans le plan XZ. La platine 18 de fixation comprend des orifices 19 de fixation qui, conjointement avec des éléments de fixation, permettent de solidariser le renfort 3 de pied 4 arrière sur une doublure 20 d'habitacle, elle-même fixée à son tour sur la carrosserie 1 du véhicule 2 automobile. Les éléments de fixation ne sont pas représentés sur les figures.

L'extrémité 17 inférieure du renfort 3 de pied 4 arrière définit un espace 21 d'accueil, destiné à accueillir une extrémité saillante d'un boîtier de rail de porte latérale coulissante.

Le rail 22 de la porte latérale coulissante est traditionnellement porté par un boîtier de rail, non représenté sur les figures. Ce boîtier loge dans une lumière 23 longitudinale, pratiquée dans la carrosserie 1 du véhicule 2 automobile.

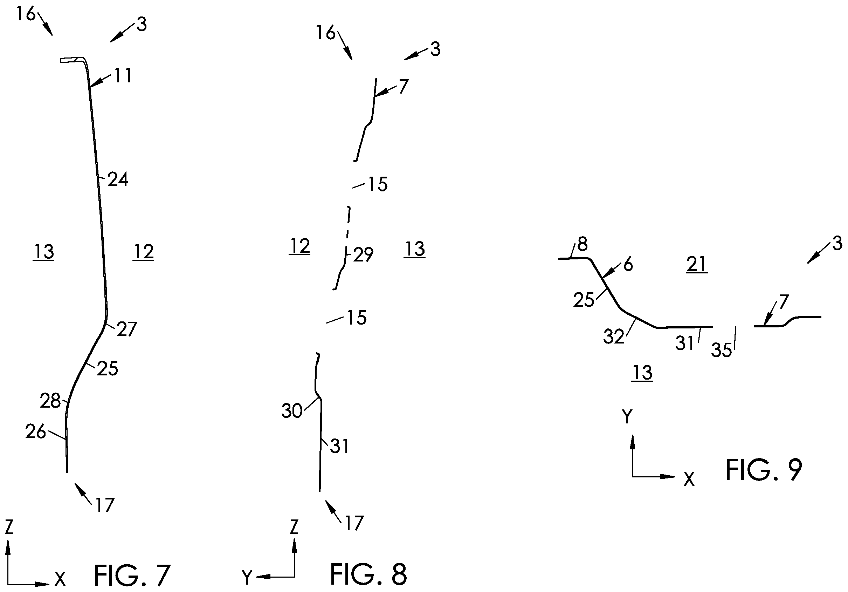

En référence à la figure 7, la paroi 11 de custode comprend une paroi 24 supérieure de custode, une paroi 25 oblique et une paroi 26 inférieure de custode. La paroi 26 inférieure de custode est décalée par rapport à la paroi 24 supérieure de custode, vers l'espace 13 extérieur.

La paroi 25 oblique et la paroi 24 supérieure de custode définissent une première courbure 27, dont la concavité est tournée vers l'espace 13 extérieur du renfort 3 de pied 4 arrière.

La paroi 25 oblique et la paroi 26 inférieure de custode définissent une seconde courbure 28, dont la concavité est tournée vers l'espace 12 intérieur du renfort 3 de pied 4 arrière.

La partie 7 centrale comprend une partie 29 supérieure et une partie 31 inférieure. La partie 31 inférieure est décalée vers l'espace 13 extérieur, par rapport à la partie 29 supérieure, via un décroché 30.

Ainsi, la partie 31 inférieure et la paroi 26 inférieure de custode définissent ensemble l'espace 21 d'accueil, au niveau de l'extrémité 17 inférieure.

La paroi 25 oblique et la partie 31 inférieure ainsi que la paroi 26 inférieure de custode et la partie 31 inférieure sont reliées par une paroi 32 de jonction, visible sur la section représentée en figure 9.

L'espace 21 d'accueil peut accueillir l'extrémité du boîtier de rail, lorsque le véhicule comprend une porte latérale coulissante. Indifféremment, le renfort 3 de pied 4 arrière peut ne pas accueillir le rail 22, lorsqu'il est installé du côté d'un véhicule 2 ne comprenant pas de porte latérale coulissante. C'est par exemple le cas sur les véhicules 2 ne comprenant une porte latérale coulissante que d'un côté.

Le renfort 3 de pied 4 arrière est lui-même renforcé au moyen d'une pièce 33 de renfort supérieure, sensiblement rectangulaire, positionnée entre la paroi 11 de custode et la partie 7 centrale. Le renfort 3 de pied 4 arrière présente ainsi une rigidité structurelle accrue. La pièce 33 de renfort supérieure est fixée sur un support 34, lui-même assemblé sur le renfort 3 de pied 4 arrière. La pièce 33 de renfort supérieure joue en outre le rôle de cloison d'étanchéité.

La partie 31 inférieure comprend une échancrure 35, destinée à permettre le passage de câbles (non représentés), notamment lorsque la porte latérale coulissante est motorisée.

Le renfort 3 de pied 4 arrière peut ainsi être utilisé pour renforcer un pied 4 arrière, que ce véhicule 2 comprenne ou non une porte latérale coulissante, et que celle-ci soit motorisée ou non.

Lorsque le renfort 3 de pied 4 arrière est utilisé du côté du véhicule 2 comprenant une porte latérale coulissante, l'espace 21 d'accueil comprend également une pièce 36 de renfort inférieure, fixée par des éléments de fixation sur le renfort 3 de pied 4 arrière, ainsi qu'un couvercle 37 de boîtier de rail, fixé à la fois sur la carrosserie 1 et sur la pièce 36 de renfort inférieure.

La pièce 36 de renfort inférieure et le couvercle 37 de boîtier de rail permettent tous deux de renforcer l'espace 21 d'accueil et participent avantageusement au renforcement structurel de l'extrémité 17 inférieure du renfort 3 de pied 4 arrière.

Le couvercle 37 de boîtier de rail et la pièce 36 de renfort inférieure ne sont initialement pas montés sur le renfort 3 de pied 4 arrière, mais directement assemblés sur la carrosserie 1 du véhicule 2 automobile. Le renfort 3 est ensuite assemblé sur le pied 4 arrière, la pièce 36 de renfort inférieure étant alors fixée sur la partie 31 inférieure.

Le couvercle 37 de boîtier de rail et la pièce 36 de renfort inférieure permettent, outre l'apport de résistance mécanique, d'étanchéifier cette zone de la lumière 23.

Afin que l'extrémité du boîtier de rail puisse loger dans l'espace 21 d'accueil, la paroi 26 inférieure de custode présente une largeur (suivant l'axe Y) suffisamment grande.

La partie 31 inférieure plane et s'étendant dans le plan XZ accueille les interfaces de la porte latérale coulissante, lorsque celle-ci est motorisée. Ces interfaces ne sont pas représentées et sont fixées sur la partie 31 inférieure, du côté de l'espace 13 extérieur du renfort 3 de pied 4 arrière.

Un tel renfort 3 de pied 4 arrière présente de nombreux avantages.

Ainsi, un premier avantage est qu'il peut être utilisé pour renforcer un quelconque pied 4 arrière, que celui-ci soit situé au-dessus d'une porte latérale coulissante ou non, que la porte latérale coulissante soit motorisée ou non.

Un deuxième avantage est la réduction du risque d'erreurs d'assemblage pour l'opérateur.

Un troisième avantage est que sur une ligne de montage, un seul type de renfort 3 de pied 4 arrière est utilisé.

Un quatrième avantage est de limiter la diversité des outils pour le formage du renfort 3 de pied 4 arrière.

## Revendications

1. Renfort (3) de pied (4) arrière d'une carrosserie (1) de véhicule (2) automobile comprenant une extrémité (16) supérieure et une extrémité (17) inférieure, **caractérisé en ce que** le renfort comprend une partie (7) centrale et une paroi (11) de custode définissant avec la partie (7) centrale un angle et un espace (12) intérieur, la paroi (11) de custode comprenant une paroi (24) supérieure de custode et une paroi (26) inférieure de custode située à l'extrémité (17) inférieure, la paroi (26) inférieure de custode étant décalée par rapport à la paroi (24) supérieure de custode vers un espace (13) extérieur par opposition avec l'espace (12) intérieur, la partie (7) centrale comprenant une partie (29) supérieure et une partie (31) inférieure située à l'extrémité (17) inférieure, la partie (31) inférieure étant décalée par rapport à la partie (29) supérieure vers l'espace (13) extérieur, la partie (31) inférieure et la paroi (26) inférieure de custode définissant ensemble un espace (21) d'accueil d'une extrémité de boîtier de rail d'une porte latérale coulissante.

2. Renfort (3) selon la revendication précédente, **caractérisé en ce que** le renfort (3) de pied (4) arrière comprend un renfort (8) de custode dont la forme est sensiblement similaire à une feuillure (9) de custode de la carrosserie (1).

3. Renfort (3) selon la revendication 2, **caractérisé en ce que** la paroi (11) de custode et le renfort (8) de custode définissent un angle compris entre 100° et 170°.

4. Renfort (3) selon l'une quelconque des revendications précédentes, **caractérisé en ce que** la paroi (11) de custode et la partie (7) centrale définissent un angle compris entre 100° et 170°.

5. Renfort (3) selon l'une quelconque des revendications précédentes, **caractérisé en ce que** la paroi (11) de custode et la paroi (26) inférieure de custode sont reliées par une paroi (25) oblique.

6. Renfort (3) selon la revendication 5, **caractérisé en ce que** la paroi (25) oblique et la paroi (24) supérieure de custode définissent une première courbure (27), dont la concavité est tournée vers l'espace (13) extérieur, la paroi (25) oblique et la paroi (26) inférieure de custode définissent une seconde courbure (28), dont la concavité est tournée vers l'espace (12) intérieur du renfort (3) de pied (4) arrière.

7. Renfort (3) selon l'une quelconque des revendications précédentes, **caractérisé en ce que** la partie (7) centrale comprend un décroché (30), orienté vers l'espace (13) extérieur, ce décroché (30) reliant la partie (29) supérieure à la partie (31) inférieure.

8. Renfort (3) selon l'une quelconque des revendications précédentes, **caractérisé en ce que** le renfort (3) de pied (4) arrière comprend une pièce (33) de renfort supérieure, positionnée entre la paroi (11) de custode et la partie (7) centrale.

9. Véhicule automobile comprenant une carrosserie (1) munie de pieds (4) arrière, **caractérisé en ce que** celui-ci comprend un renfort (3) de pied (4) arrière selon l'une quelconque des revendications précédentes.

## Patentansprüche

1. Verstärkung (3) einer hinteren Säule (4) einer Karosserie (1) eines Kraftfahrzeugs (2), die ein oberes Ende (16) und ein unteres Ende (17) umfasst, **dadurch gekennzeichnet, dass** die Verstärkung einen zentralen Teil (7) und eine Wand (11) des Karosserieteils über dem Hinterrad umfasst, die mit dem zentralen Teil (7) einen Winkel und einen Innenraum (12) definiert, wobei die Wand (11) des Karosserieteils über dem Hinterrad eine obere Wand (24) des Karosserieteils über dem Hinterrad und eine untere Wand (26) des Karosserieteils über dem Hinterrad, die an dem unteren Ende (17) liegt, umfasst, wobei die untere Wand (26) des Karosserieteils über dem Hinterrad bezüglich der oberen Wand (24) des Karosserieteils über dem Hinterrad zu einem Außenraum (13) gegenüber zu dem Innenraum (12) versetzt ist, wobei der zentrale Teil (7) einen oberen Teil (29) und einen unteren Teil (31), der an dem unteren Ende (17) liegt, umfasst, wobei der untere Teil (31) bezüglich des oberen Teils (29) zu dem Außenraum (13) versetzt ist, wobei der untere Teil (31) und die untere Wand (26) des Karosserieteils über dem Hinterrad gemeinsam einen Aufnahmeraum (21) eines Schienengehäuseendes einer seitlichen Schiebetür definieren.

2. Verstärkung (3) nach dem vorstehenden Anspruch, **dadurch gekennzeichnet, dass** die Verstärkung (3) der hinteren Säule (4) eine Verstärkung (8) des Karosserieteils über dem Hinterrad umfasst, deren Form im Wesentlichen einer Ausfalzung (9) des Karosserieteils über dem Hinterrad der Karosserie (1) ähnlich ist.

3. Verstärkung (3) nach Anspruch 2, **dadurch gekennzeichnet, dass** die Wand (11) des Karosserieteils über dem Hinterrad und die Verstärkung (8) des Karosserieteils über dem Hinterrad einen Winkel zwischen 100° und 170° definieren.

4. Verstärkung (3) nach einem der vorstehenden Ansprüche, **dadurch gekennzeichnet, dass** die Wand (11) des Karosserieteils über dem Hinterrad und der zentrale Teil (7) einen Winkel zwischen 100° und 170° definieren.

5. Verstärkung (3) nach einem der vorstehenden Ansprüche, **dadurch gekennzeichnet, dass** die Wand (11) des Karosserieteils über dem Hinterrad und die untere Wand (26) des Karosserieteils über dem Hinterrad durch eine schräge Wand (25) verbunden sind.

6. Verstärkung (3) nach Anspruch 5, **dadurch gekennzeichnet, dass** die schräge Wand (25) und die obere Wand (24) des Karosserieteils über dem Hinterrad eine erste Krümmung (27) definieren, deren Konkavität zu dem Außenraum (13) gerichtet ist, wobei die schräge Wand (25) und die untere Wand (26) des Karosserieteils über dem Hinterrad eine zweite Krümmung (28) definieren, deren Konkavität zu dem Innenraum (12) der Verstärkung (3) der hinteren Säule (4) gerichtet ist.

7. Verstärkung (3) nach einem der vorstehenden Ansprüche, **dadurch gekennzeichnet, dass** der zentrale Teil (7) einen Rücksprung (30) umfasst, der zu dem Außenraum (13) ausgerichtet ist, wobei dieser Rücksprung (30) den oberen Teil (29) und den unteren Teil (31) verbindet.

8. Verstärkung (3) nach einem der vorstehenden Ansprüche, **dadurch gekennzeichnet, dass** die Verstärkung (3) der hinteren Säule (4) ein oberes Verstärkungsteil (33) umfasst, das zwischen der Wand (11) des Karosserieteils über dem Hinterrad und dem zentralen Teil (7) positioniert ist.

9. Kraftfahrzeug, das eine Karosserie (1) umfasst, die mit hinteren Säulen (4) versehen ist, **dadurch gekennzeichnet, dass** diese eine Verstärkung (3) der hinteren Säule (4) nach einem der vorstehenden Ansprüche umfasst.

## Claims

1. A reinforcement (3) of a rear pillar (4) of a body (1) of a motor vehicle (2) including an upper end (16) and a lower end (17), **characterized in that** the reinforcement includes a central portion (7) and a quarter panel wall (11) defining, together with the central portion (7), an angle and an inner space (12), the quarter panel wall (11) including an upper quarter panel wall (24) and a lower quarter panel wall (26) situated at the lower end (17), the lower quarter panel wall (26) being offset with respect to the upper quarter panel wall (24) towards an outer space (13) by opposition with the inner space (12), the central portion (7) including an upper portion (29) and a lower portion (31) situated at the lower end (17), the lower portion (31) being offset with respect to the upper portion (29) towards the outer space (13), the lower portion (31) and the lower quarter panel wall (26) defining together a receiving space (21) of a rail case end of a sliding lateral door.

2. The reinforcement (3) according to the preceding claim, **characterized in that** the reinforcement (3) of the rear pillar (4) includes a quarter panel reinforcement (8), the shape of which is substantially similar to a quarter panel rebate (9) of the body (1).

3. The reinforcement (3) according to Claim 2, **characterized in that** the quarter panel wall (11) and the quarter panel reinforcement (8) define an angle comprised between 100° and 170°.

4. The reinforcement (3) according to any one of the preceding claims, **characterized in that** the quarter panel wall (11) and the central portion (7) define an angle comprised between 100° and 170°.

5. The reinforcement (3) according to any one of the preceding claims, **characterized in that** the quarter panel wall (11) and the lower quarter panel wall (26) are connected by an oblique wall (25).

6. The reinforcement (3) according to Claim 5, **characterized in that** the oblique wall (25) and the upper quarter panel wall (24) define a first curve (27), the concavity of which is turned towards the outer space (13), the oblique wall (25) and the lower quarter panel wall (26) define a second curve (28), the concavity of which is turned towards the inner space (12) of the reinforcement (3) of the rear pillar (4) .

7. The reinforcement (3) according to any one of the preceding claims, **characterized in that** the central portion (7) includes a recess (30), oriented towards the outer space (13), this recess (30) connecting the upper portion (29) to the lower portion (31).

8. The reinforcement (3) according to any one of the preceding claims, **characterized in that** the reinforcement (3) of the rear pillar (4) includes an upper reinforcement part (33), positioned between the quarter panel wall (11) and the central portion (7).

9. A motor vehicle including a body (1) provided with rear pillars (4), **characterized in that** this includes a rear pillar (4) reinforcement (3) according to any one of the preceding claims.
